# EUROPÄISCHE PATENTANMELDUNG

(11) **EP 1 228 946 A2**
(43) Veröffentlichungstag der Anmeldung: **07.08.2002**
(21) Anmeldenummer: 02002148.1
(22) Anmeldetag: 29.01.2002
(51) Int. Cl.: B62D 25/07, B60R 9/04

(54) **Fahrzeugdach**

(30) Priorität: 06.02.2001 DE 10105168
(71) Anmelder: JAC Products Deutschland GmbH, 42285 Wuppertal (DE)
(72) Erfinder: Koch, Winfried, 35282 Rauschenberg (DE)
(74) Vertreter: Rehders, Jochen, Dipl.-Ing.

(57) **Zusammenfassung**

Beschrieben wird ein Fahrzeugdach für einen Personenkraftwagen od. dgl. mit einem Dachblech und mit der Besonderheit, dass das Dachblech (1) an den Längsseitenbereichen mit aus der Dachebene herausgeformten Aufnahmen (2) zur Befestigungsanordnung von Dachlastenquerträgern (4) ausgebildet ist.

## Beschreibung

Die Erfindung bezieht sich auf ein Fahrzeugdach für einen Personenkraftwagen (Limousine, Coupé, Kombi, Van oder Kleinbus) mit einem Dachblech.

Auf dem Dachblech von Personenkraftwagen der vorgenannten Art werden häufig Dachlastenträger zum Transport von Gegenständen der unterschiedlichsten Art angeordnet. Bei Personenkraftwagen älterer Generation erfolgte die Befestigungsanordnung der Dachlastenträger noch an den Fahrzeugregenrinnen (DE 27 10 222 A1), die bei heutigen Fahrzeugen nicht mehr üblich sind. Die heutige Anordnung von Dachlastenträgern auf einem Fahrzeugdach sieht in der Regel bleibend auf einem Fahrzeugdach befestigte Dachrelings vor, an die Dachlastenquerträger abnehmbar befestigt werden können (DE 28 04 588 A1). Eine Dachreling der genannten Art besteht üblicherweise aus mindestens einem Holm an jeder Dachseite und mindestens zwei jeweils einen Holm tragenden Relingfüßen. Zur Montage werden die Holme und Füße zusammengesteckt und die Füße werden mit Gewindebolzen bestückt, deren überstehenden Enden durch Bohrungen im Dachblech hindurchgeführt werden. Auf die Gewindebolzen werden von der anderen Seite des Dachblechs her Schraubenmuttern aufgebracht (DE-C4 004 829). Der Aufwand bei der Herstellung einer herkömmlichen Dachreling ist, ebenso wie die Montage einer solchen, beachtlich. Es ist auch bekannt, auf dem Dachblech eines Personenkraftwagens zwei Schienen entlang der Dachblechlängsseitenbereiche zu befestigen (DE 198 03 232 A1) und daran Dachlastenquerträger abnehmbar anzuordnen. Auch hier ist für die Herstellung der Schienen und für die Montage derselben mit ihren Abdichtungsproblemen ein hoher Aufwand gegeben.

Der Erfindung liegt nun ausgehend von einem Fahrzeugdach der eingangs genannten Art die Aufgabe zugrunde, Vorsorge dafür zu treffen, dass sich die Anordnung von Dachlastenquerträgern auf dem Dachblech eines Personenkraftfahrzeugs wesentlich einfacher und kostengünstiger realisieren lässt.

Zur Lösung dieser Aufgabe ist erfindungsgemäß vorgesehen, dass das Dachblech an den Längsseitenbereichen mit materialeinheitlich aus der Dachebene nach oben ausgeformten Aufnahmen zur Befestigungsanordnung von Dachlastenquerträgern ausgebildet ist, die aus nach oben ausgestellten Sicken bestehen und sich nahezu über die gesamte Dachblechlänge erstrecken.

Der besondere Vorteil der Erfindung besteht darin, dass die Aufnahmen nicht mehr separat herzustellende und zu montierende Relings oder Schienen sondern integrale, einstöckig und materialeinheitlich mit dem Dachblech ausgebildete Bestandteile des Fahrzeugsdachs sind.

Die jeweils aus nach oben ausgestellten Sicken lassen sich völlig kostenneutral und im gleichen Arbeitsgang mit der ohnehin erforderlichen Formgebungsarbeit des Dachblechs herstellen und erbringen den zusätzlichen Vorteil einer Dachversteifung. Aufgrund der Tatsache, dass sich die als Sicken ausgebildeten Aufnahmen nahezu über die gesamte Dachblechlänge erstrecken, ergibt sich für die Dachlastenquerträger eine nahezu beliebige Befestigungsanordnung über die gesamte Sickenlänge.

Für die Befestigungselemente, z.B. Klauen der Dachlastenquerträger läßt sich an den Aufnahmen eine formschlüssige Verbindung dadurch erreichen, dass in Ausgestaltung der Erfindung die Aufnahmen zumindest in Bereichen der Dachlastenquerträger-Befestigungsanordnungen Einprägungen vorgesehen sind, die ein Verschieben der Querträger im Falle eines Unfalls verhindern.

Um einer Verformung oder sonstiger Beschädigung der Aufnahmen vorzubeugen, ist gemäß einer Weiterbildung der Erfindung vorgesehen, dass die als Sicken aus gebildeten Aufnahmen innenseitig durch darin eingesetzte oder eingegossene Formkörper ausgesteift sind.

Einem Bestreben der Automobilbauer zukünftig verstärkt modulare Fahrzeugbauteile einzusetzen wird durch eine Weiterbildung der Erfindung, die darin besteht, dass das mit Aufnahmen zur Befestigungsanordnung von Dachlastenquerträgern ausgebildete Dachblech mit einem daran angeordneten Dachhimmel eine vorgefertigte Montageeinheit bildet, Rechnung getragen. Dabei kann der Dachhimmel mit einem Dachhimmelbezug und/oder mit Innenraumverkleidungen, Sonnenblenden, Innenrückblickspiegel, Innenbeleuchtungseinrichtungen, Verkabelungen, Bedienund Anzeigeelemente, Schiebe- oder Sonnendach und deren Rahmenteile und Antriebselemente, Haltegriffe u. dgl. versehen sein. Es empfiehlt sich, dass die vorgefeitigte Montageeinheit eine auf die Fügestellen der Säuen und/oder dem Dachrahmen der Fahrzeugkarosserie abgestimmte Anschlusskonfiguration aufweist. Ein Ausführungsbeispiel der Erfindung wird nachfolgend anhand der Zeichnung näher erläutert, und es zeigt:

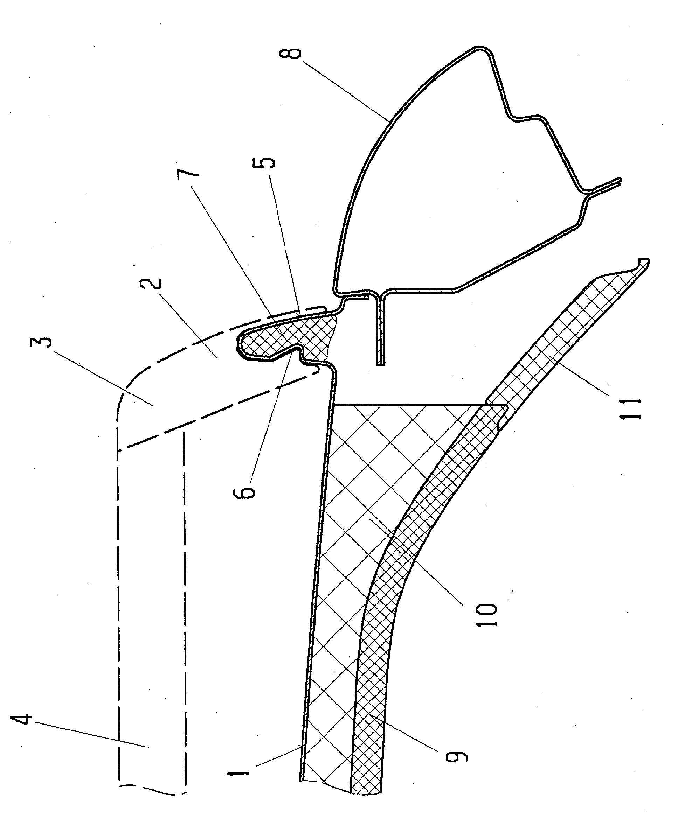

Fig. 1 einen Schnitt durch einen seitlichen Längsrandbereich eines Fahrzeugdachs.

Das Fahrzeugdach weist ein Dachblech 1 auf, das an seinen Längsseitenbereichen, von denen nur einer dargestellt ist, nach oben ausgeformte Aufnahmen 2 zur Befestigungsanordnung von Stützfüßen oder Klauen 3 von Dachlastenquerträgern 4 besitzt. In der Zeichnung ist ein Dachlastenquerträger 4 mit einer Klaue 3 lediglich gestrichelt angedeutet.

Jede Aufnahme 2 besteht aus einer nach oben ausgestellten Sicke 5 im Dachblech 1 und ist damit ein integrierter Dachblechbestandteil. Zur Herstellung einer formschlüssigen Verbindung zwischen einer jeden Klaue 3 und einer jeden Aufnahme 2, weisen die Sicken 5 jeweils eine Einprägung 6 auf, in die ein entsprechender Klauenvorsprung verrastend eingreift. Die Einprägung 6 kann sich auch über nahezu die gesamte Länge der Sicke 5 erstrecken. Einer unerwünschten Verformung der Aufnahme 2, die bei einem zu starken Verspannen der Klauen 3 entstehen könnte, kann durch einen in jeder Sicke 5 angeordneten Formkörper 7 vorgebeugt werden.

Das Dachblech 1 ist an einem zur Fahrzeugkarosserie gehörenden Seitenwandrahmen 8 befestigt, und zwar durch eine durch Kleben, Löten, Schweißen, Schrauben, Nieten gebildete Befestigungsanordnung. Im Übergangsbereich zwischen dem Dachblech 1 und dem Seitenrahmen 8 kann ein nichtgezeigter Keder oder ein sonstiges Dichtmittel angeordnet sein.

Das Fahrzeugdach weist zudem die Besonderheit auf, daß es aus einem Dachmodul, wie dargestellt, bestehen kann, das zusätzlich Aufnahmen 2 zur Befestigungsanordnung von Dachlastenquerträgern 4 aufweist. Im Ausführungsbeispiel besteht das Dachmodul aus dem Dachblech 1 mit den Aufnahmen 2, einem Dachhimmel 9 und einer Zwischenlage 10 zwischen Dachblech 1 und Dachhimmel 9. Das Dachmodul weist somit einen Sandwichaufbau auf, wobei die Zwischenlage 10 z.B. aus Schaumkunststoff besteht. Zwischen dem Dachblech 1 und der Zwischenlage 10 einerseits wie auch zwischen der Zwischenlage und dem Dachhimmel 9 andererseits können Klebeverbindungen vorgesehen sein, wobei sowohl physikalisch als auch chemisch abbindende Klebstoffe zum Einsatz kommen können. An den Dachhimmel 9 kann sich, wie in der Zeichnung gezeigt, eine Dachrahmen- oder Säulenverkleidung 11 anschließen.

Es soll nicht unerwähnt bleiben dass die Sicken S auch als Stylingelemente einer Dachreling dienen und dass die durch die Sicken 5 gebildeten Aufnahmen 2 einen positiven Nebeneffekt insofern ergeben, als sie ein Eindringen von sich auf dem Fahrzeugdach befindlichen Regenwasser in den Fahrgastraum bei geöffneter Tür verhindern.

Wenn auch im einzelnen nicht dargestellt, kann das Dachmodul eines oder mehrere Anbauteile in vormontierter Anordnung aufweisen. Hierzu gehören beispielsweise ein Dachhimmelbezug, Innenraumverkleidungen, Sonnenblenden, Innenbeleuchtungseinrichtungen, Haltegriffe u. dgl. mehr.

## Patentansprüche

1. Fahrzeugdach für .einen Personenkraftwagen od. dgl. mit einem Dachblech (1), an dessen Längsseitenbereichen materialeinheitlich aus der Dachebene nach oben ausgeformten Aufnahmen (2) zur Befestigungsanordnung von Dachlastenquerträgern (4) ausgebildet sind, die aus nach oben ausgestellten Sicken (5) bestehen und sich nahezu über die gesamte Dachblechlänge erstrecken.

2. Fahrzeugdach nach wenigstens Anspruch 1, **dadurch gekennzeichnet, dass** die Aufnahmen (2) zumindest in Bereichen der Dachlastenquerträger-Befestigungsanordnungen Einprägungen (6) aufweisen.

3. Fahrzeugdach nach einem der Ansprüche 1 oder 2, **dadurch gekennzeichnet, dass** die als Sicken (5) ausgebildeten Aufnahmen (2) innen durch darin eingesetzte oder eingegossene Formkörper (7) ausgesteift sind.

4. Fahrzeugdach nach einem der Ansprüche 1 bis 3, **dadurch gekennzeichnet, dass** das mit Aufnahmen (2) zur Befestigungsanordnung von Dachlastenquerträgern (4) ausgebildete Dachblech (1) mit einem daran angeordneten Dachhimmel (9) eine vorgefertigte Montageeinheit bildet.

5. Fahrzeugdach nach Anspruch 4, **dadurch gekennzeichnet, dass** der Dachhimmel (9) mit einem Dachhimmelbezug und/oder mit Innenraumverkleidungen, Sonnenblenden, Innenrückblickspiegel, Innenbeleuchtungseinrichtungen, Verkabelungen, Bedien- und Anzeigeelemente, Schiebe- oder Sonnendach und deren Rahmenteile und Antriebselemente, Haltegriffe u. dgl. versehen ist.

6. Fahrzeugdach nach Anspruch 4 oder 5, **dadurch gekennzeichnet, dass** die vorgefertigte Montageeinheit eine auf die Fügestellen der Säulen und/oder dem Dachrahmen der Fahrzeugkarosserie abgestimmte Anschlusskonfiguration aufweist.
